# EUROPÄISCHE PATENTSCHRIFT

(11) **EP 3 642 933 B1**
(45) Veröffentlichungstag und Bekanntmachung des Hinweises auf die Patenterteilung: **02.03.2022**
(21) Anmeldenummer: 18736788.3
(22) Anmeldetag: 20.06.2018
(51) Int. Cl.: H02K 1/12, H02K 15/06

(54) **VORSTECKNEST UND VERFAHREN ZUR BILDUNG EINES KRANZES AUS EINER VIELZAHL VON U-FÖRMIGEN, ELEKTRISCH LEITFÄHIGEN HAIRPINS, UM DEN KRANZ ANSCHLIESSEND IN EINEM MASCHINENELEMENT EINER ELEKTRISCHEN MASCHINE VERBAUEN ZU KÖNNEN**
PRE-PINNING NEST AND METHOD FOR FORMING A RING FROM A PLURALITY OF U-SHAPED ELECTRICALLY CONDUCTIVE HAIRPINS IN ORDER TO BE ABLE TO SUBSEQUENTLY INSTALL THE RING IN A MACHINE ELEMENT OF AN ELECTRICAL MACHINE
DISPOSITIF DE PRÉ-MONTAGE ET PROCÉDÉ POUR FORMER UNE COURONNE À PARTIR D'UNE PLURALITÉ D'ÉLÉMENTS ÉLECTROCONDUCTEURS EN ÉPINGLE À CHEVEUX EN FORME D'U, PERMETTANT D'INTÉGRER ULTÉRIEUREMENT LA COURONNE DANS UN ÉLÉMENT D'UN MOTEUR ÉLECTRIQUE

(30) Priorität: 20.06.2017 DE 102017113617
(43) Veröffentlichungstag der Anmeldung: 29.04.2020
(73) Patentinhaber: Grob-Werke GmbH & Co. KG, 87719 Mindelheim (DE)
(72) Erfinder: METZGER, Manfred, 86871 Rammingen (DE); SCHMÖLZ, Markus, 87668 Rieden (DE)
(74) Vertreter: KASTEL Patentanwälte PartG mbB
(86) Internationale Anmeldenummer: PCT/DE2018/100574
(87) Internationale Veröffentlichungsnummer: WO 2018/233769

(56) Entgegenhaltungen:
- EP-A2- 0 162 317

## Beschreibung

Die Erfindung betrifft ein Vorstecknest und ein Verfahren zur Bildung eines Kranzes aus einer Vielzahl von U-förmigen, elektrisch leitfähigen Hairpins, um den Kranz anschließend in einem Maschinenelement einer elektrischen Maschine verbauen zu können. Weiterhin betrifft die Erfindung eine Vorrichtung zum Herstellen eines Maschinenelements einer elektrischen Maschine.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Maschinenelementen derartiger elektrischer Maschinen, wie beispielsweise Statoren oder Rotoren, ist es oftmals erforderlich, Enden von aus Drähten gebildeten elektrischen Leitern miteinander zu verbinden oder auf sonstige Weise gemeinsam zu verarbeiten, wie z.B. gemeinsam zu schneiden oder zu formen.

Aus der EP 0 162 317 A2 sind ein Rotor eines als Anlasser zu verwendenden Elektromotors sowie ein Verfahren und eine Vorrichtung zum Herstellen des Rotors bekannt. Die Vorrichtung hat eine konzentrische Anordnung eines äußeren ersten Aufnahmeelements mit ersten Nuten, deren Nutöffnung nach innen gerichtet ist, und eines inneren zweiten Aufnahmeelements mit zweiten Nuten, deren Nutöffnungen nach außen gerichtet sind, wobei die Aufnahmeelemente relativ zueinander verdrehbar sind und die ersten und zweiten Nuten derart angeordnet sind, dass in einer Grundstellung je ein Paar aus erster Nut und zweiter Nut zueinander ausgerichtet sind. Drahtstücke mit zwei zueinander parallelen geradlinigen Schenkeln, die durch einen schlaufenförmigen Biegekopf verbunden sind, der einen ersten gebogenen Abschnitt, einen U-förmig gebogenen Abschnitt einen zweiten gebogenen Abschnitt aufweist, werden manuell in der Grundstellung der Aufnahmeelemente, in der die ersten und die zweiten Nuten zueinander ausgerichtet sind, mit ihrem ersten Schenkel in die erste Nut des ersten Aufnahmeelements und gleichzeitig mit dem zweiten Schenkel in eine gegenüberliegende zweite Nut des zweiten Aufnahmeelements gesteckt. Daraufhin werden die Aufnahmeelemente relativ zueinander zunächst in die eine Drehrichtung und dann die andere Drehrichtung verdreht, so dass der erste und der zweite Schenkel voneinander weg gebogen werden und der Biegekopf unter Aufpressen von Werkzeugen mit hohem Druck zu einer Dachform gebogen wird. Dadurch wird ein Kranz von U-förmigen Hairpins durch Ineinanderbiegen und Formen der Wickelköpfe gebildet, der dann den Rotor zum Bilden der Rotorwicklung überführt werden kann.

Demnach werden bei einigen Elektromotoren Spulenwicklungen, insbesondere des Stators, aus einer Vielzahl von Drahtstücken gebildet, deren Enden miteinander verbunden sind. Derartige Drahtstücke werden oftmals als Hairpins bezeichnet. Der Draht, aus dem die Hairpins geformt werden, kann insbesondere einen rechteckigen Querschnitt haben, als Flach-, Vierkant oder Profildraht ausgestattet sein, oder zum Beispiel als Flachbandstahl oder ähnliches vorliegen.

Beispielsweise dient ein Statorelement mit einer Vielzahl von Nuten zur Aufnahme der Hairpins.

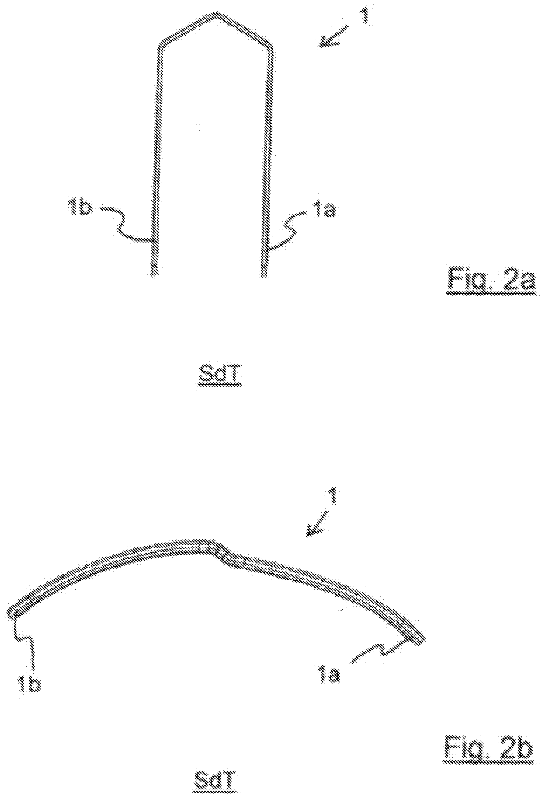

Ein Beispiel eines bekannten Hairpins ist in **Fig. 2a** in einer Seitenansicht gezeigt. Der Hairpin 1 weist zwei parallel zueinander verlaufende Schenkel 1a, 1b auf, sowie mehrere Winkel, aus denen sich eine Dachform ergibt, die auch als Hausdachform bezeichnet wird. Um bei der Herstellung von Statoren eine Vielzahl von Hairpins möglichst dicht gepackt zusammenzustecken, sind die Hairpins in ihrem Dachbereich in einer Richtung gebogen, die senkrecht zur Ebene des Hairpins verläuft, das heißt senkrecht zur Zeichenebene der Figur 2a.

**Fig. 2b** zeigt den Hairpin in einer vergrößerten Ansicht von oben auf sein Dach. In dieser Ansicht verlaufen die beiden Schenkel 1a, 1b des Hairpins 1 senkrecht zur Zeichenebene. Der so gebogene Draht oder Hairpin weist eine dreidimensionale Form bzw. eine 3-D Form auf.

Um beispielsweise einen Stator unter Verwendung von Hairpins als elektrische Leiter herzustellen, müssen die verschiedenen Hairpins so im Stator verbaut werden, dass sie einen oder mehrere ringförmige Kränze bilden. An ihren Enden bzw. an den Enden ihrer Schenkel werden die einzelnen Hairpins elektrisch miteinander verbunden und bilden auf diese Weise eine dicht gepackte Spulenwicklung in der Form eines oder mehrerer Kränze. Die Verbindung der Enden der Hairpins erfolgt üblicherweise durch Schweißen.

Um die Phasen des Stators an eine Leistungselektronik anzuschließen, wird beispielsweise ein Element zur entsprechenden Verschaltung elektrisch an die Kranzanordnung angeschlossen.

Bei den bisher bekannten Verfahren zur Herstellung eines Stators in Hairpin-Technologie werden die Hairpins direkt händisch in den Stator gesteckt.

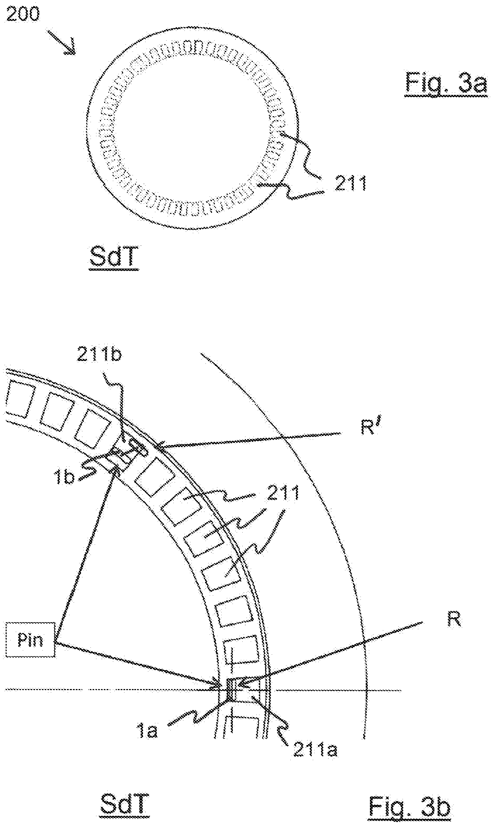

In **Fig. 3a** ist exemplarisch ein bekannter Stator 200 in einer Ansicht von oben dargestellt, der eine Vielzahl von Nuten 211 zur Aufnahme von Hairpins 1 aufweist. Die Schenkel 1a, 1b der Hairpins 1 werden durch Stecken in die Nuten 211 positioniert.

**Fig. 3b** zeigt einen vergrößerten Ausschnitt des bekannten Stators in einer Teilansicht von oben. Beide Schenkel 1a, 1b eines einzelnen Hairpins oder Pins sind in eine jeweils zugeordnete Nut 211a, 211b eingesteckt. Diese beiden Nuten sind voneinander beabstandet, so dass sich der Hairpin oder Pin mit seinem Dach über mehrere dazwischen liegende Nuten 211 hinweg erstreckt, in die weitere Hairpins gesteckt werden, so dass sich eine kranzförmige Anordnung sich überlagernder Hairpins ergibt. Um eine hohe Packungsdichte der Hairpins und somit der Statorwicklungen zu erhalten, müssen die Hairpins sehr eng positioniert werden.

Bei den bekannten Techniken zur Herstellung von Maschinenelementen wie beispielsweise Statoren mit Hilfe von Hairpins ergeben sich insbesondere folgende Nachteile:
Das händische Einstecken der Hairpins in den Stator ist zeitaufwendig und verursacht hohe Kosten.

Aufgrund der strahlenförmigen Anordnung der Nuten 211 vom Zentrum des Stators aus betrachtet, haben die U-förmigen Pins bzw. Hairpins kaum Spiel in der jeweiligen Nut. Für den Steckvorgang muss aber der außen liegende Schenkel des Hairpins auf einem weiter außen liegenden Radius gesteckt werden, als es später im Stator der Fall ist, nachdem alle Hairpins in den Stator eingesteckt und in ihrer Endposition sind. Dies ist mit einer strahlenförmigen Nutanordnung im Stator nicht prozesssicher möglich.

Dadurch können Spannungen in den Hairpins entstehen, nachdem sie in den Stator eingesteckt wurden, die sich nachteilhaft auswirken können.

Zusätzlich erzeugt die bekannte Anordnung eine Kraft, welche die gesteckten Pins oder Hairpins zum Zentrum der Aufnahme zieht. Dies ist in späteren Arbeitsprozessen unvorteilhaft.

Es ist die Aufgabe der Erfindung, bei der Herstellung eines Maschinenelements, wie beispielsweise eines Stators, ein automatisiertes Stecken der Hairpins zu ermöglichen und einen prozesssicheren Steckvorgang bei hoher Packungsdichte zu gewährleisten. Gelöst wird diese Aufgabe durch eine Vorrichtung und ein Verfahren mit den Merkmalen der unabhängigen Ansprüche. Bevorzugte Ausführungsformen sind in den abhängigen Ansprüchen definiert.

Zum Lösen dieser Aufgabe schafft die Erfindung ein Vorstecknest zur Bildung eines Kranzes aus einer Vielzahl von U-förmigen, elektrisch leitfähigen Hairpins, um den Kranz anschließend in einem Maschinenelement einer elektrischen Maschine verbauen zu können, umfassend ein Aufnahmeelement mit einer Vielzahl von Nuten zur Aufnahme der Schenkel der U-förmigen Hairpins, wobei die Nuten ringförmig um ein Zentrum Z angeordnet sind und sich senkrecht zur Ebene des Aufnahmeelements erstrecken, und die Nuten in ihrer Größe und Geometrie derart gestaltet sind, dass jeweils ein erster Schenkel eines Hairpins innerhalb der Nut rotierbar ist, um dadurch eine zwangfreie Positionierung des zweiten Schenkels des Hairpins in einer anderen Nut zu ermöglichen.

Durch die Bildung von einem oder mehreren Kränzen aus U-förmigen Hairpins im Vorfeld mittels eines Vorstecknests, das heißt bevor die Hairpins zum Beispiel in einem Stator verbaut werden, kann ein automatisiertes und prozesssicheres Stecken mit hoher Packungsdichte zum Beispiel durch einen Roboter erfolgen. Die Erfindung ermöglicht es weiterhin, die Pins in einer Aufnahme zu einem Kranz zu sammeln bzw. zu stecken. Die verschiedenen Kränze können zum Beispiel in einer Aufnahme gesammelt werden, um sie danach in ein Maschinenelement, insbesondere in einen Stator, fügen zu können.

Vorteilhafterweise sind die Nuten des Aufnahmeelements wesentlich größer als die Hohlräume des Maschinenelements bzw. Stators zur Aufnahme der Hairpins. Dadurch wird das automatisierte Stecken der U-förmigen Pins oder Hairpins noch besser ermöglicht.

Die Nuten des Aufnahmeelements sind zum Beispiel derart ausgestaltet, dass die Hairpins durch Einwirkung der Schwerkraft in ihre vorgesehene Position im Aufnahmeelement bewegt werden. Dadurch fallen die Hairpins noch besser in die vorgesehenen Positionen und es ergibt sich eine noch leichtere Positionierung.

Bevorzugt sind die Nuten des Aufnahmeelements strahlenförmig um das Zentrum Z angeordnet. Sie können insbesondere Seitenwände aufweisen, die sich in Bezug auf das Zentrum Z in radialer Richtung erstrecken. Die Nuten können beispielsweise eine Breite B aufweisen, die in radialer Richtung nach außen zunimmt.

Vorteilhaft sind die Nuten des Aufnahmeelements versetzt oder leicht versetzt zueinander angeordnet, beispielsweise turbinenförmig. Somit kann der eine Schenkel eines Hairpins um das Zentrum des anderen Schenkels in dem Aufnahmeelement leichter rotieren. Dadurch sind die Hairpins beim Stecken noch besser vor Beschädigungen geschützt. Sie haben mehr Platz in dem Aufnahmeelement und sind keinem Zwang ausgesetzt.

Die Nuten des Aufnahmeelements können jeweils Seitenwände aufweisen, die sich in Richtung eines Punktes P außerhalb des Zentrums Z erstrecken. Insbesondere können die Punkte P der einzelnen Nuten zum Beispiel auf einem Kreis um das Zentrum Z angeordnet sein.

Diese Maßnahmen verbessern die zwangfreie Positionierung der Hairpins noch weiter und reduzieren noch mehr die Gefahr einer möglichen Beschädigung.

Bevorzugt weist das Aufnahmeelement einen Innenring auf, an dessen Außenseite die Seitenwände der Nuten ausgebildet sind, um die Hairpins in ihrer jeweiligen Position zu halten.

Vorteilhaft weist das Aufnahmeelement einen Außenring auf, an dessen Innenseite die Seitenwände der Nuten ausgebildet sind, um die Hairpins in ihrer jeweiligen Position zu halten.

Das Aufnahmeelement kann insbesondere so gestaltet sein, dass es keinen Innenring oder keinen Außenring gibt. In diesem Fall werden die Hairpins durch die Geometrie des Aufnahmeelements in ihrer Position gehalten.

Das Aufnahmeelement kann insbesondere einen Innenring und einen Außenring aufweisen, zwischen denen die Nuten als Hohlräume ausgebildet sind.

Beispielsweise weist das Aufnahmeelement Halteelemente auf, die am Innenring und/oder am Außenring angeordnet sind, um die Nuten zu bilden. Es kann insbesondere Halteelemente aufweisen, die zum Beispiel als Bolzen, Zapfen, Bleche oder Ähnliches ausgestaltet sind, um die Hairpins aufzunehmen bzw. um die Nuten für die Hairpin-Aufnahme zu bilden.

Vorteilhaft sind die Nuten derart gestaltet, dass durch Aufnahme der Schenkel der Hairpins mehrere ringförmige Kränze aus einzelnen Hairpins gebildet werden. Beispielsweise können nach Fertigstellung eines Kranzes die einzelnen Kränze zusammengefügt werden, beispielsweise in einem als Sammelaufnahme ausgestalteten Aufnahmeelement.

Zum Beispiel können die Nuten eine Schräge und/oder einen oder mehrere Absätze aufweisen, um einen oder mehrere Hairpins oder Hairpin-Kränze in radialer Richtung zu positionieren. Durch die radiale Positionierung der einzelnen Kränze wird das Fügen mehrerer Kränze in dem Aufnahmeelement gewährleistet. Darüber hinaus wird verhindert, dass ein zu fügender Kranz nicht mit einem bereits gefügten Kranz kollidiert.

Durch die Schräge und/oder die Absätze, die zum Beispiel an der Oberseite des Aufnahmeelements im Bereich der Nuten ausgebildet sind, werden die Hairpins oder Hairpin-Kränze durch die Schwerkraft oder eine von außen wirkende Kraft auf einen äußeren Durchmesser gebracht und hier positioniert.

Vorteilhaft weist das Vorstecknest im Bereich der Nuten eine Kegelstumpfform auf.

Insbesondere können die Nuten Seitenwände aufweisen, an deren oberen Ende eine Schräge und/oder ein oder mehrere Stufen ausgebildet sind.

Beispielsweise ist das Vorstecknest als Mehrfach-Vorstecknest zum Bilden mehrerer Kranzlagen ausgestaltet.

Die Erfindung ermöglicht es, insbesondere durch die Geometrie des Aufnahmeelements, die Hairpins mit einem Roboter automatisiert zu Kränzen zu stecken und darüber hinaus auch mehrere Kränze in einer Aufnahme zu sammeln.

Gemäß einer Weiterbildung schafft die Erfindung eine Vorrichtung zum Herstellen eines Maschinenelements einer elektrischen Maschine, umfassend ein Vorstecknest gemäß einer der zuvor erläuterten Ausgestaltungen zur Bildung eines Kranzes aus einer Vielzahl von U-förmigen, elektrisch leitfähigen Hairpins, ein Maschinenelementgehäuse zur Aufnahme der Hairpins, und eine Einrichtung zum Liefern und Einbringen des Kranzes aus U-förmigen Hairpins in das Maschinenelementgehäuse.

Gemäß einem weiteren Aspekt schafft die Erfindung ein Verfahren zur Bildung eines Kranzes aus einer Vielzahl von U-förmigen, elektrisch leitfähigen Hairpins, um den Kranz anschließend in einem Maschinenelement einer elektrischen Maschine verbauen zu können, umfassend die Schritte:
- Bereitstellen einer Vielzahl von U-förmigen, elektrisch leitfähigen Hairpins;
- Zusammenfügen der Hairpins durch Stecken der Schenkel der Hairpins in ein Aufnahmeelement, sodass die Hairpins gemeinsam einen Kranz bilden;
- wobei beim Stecken des jeweiligen Hairpins in das Aufnahmeelement ein erster Schenkel des Hairpins in dem Aufnahmeelement rotierbar gehalten wird, um den zweiten Schenkel des Hairpins in dem Aufnahmeelement durch Rotation um den ersten Schenkel zu positionieren;
- anschließend Bereitstellen des Kranzes aus Hairpins zur Einbringung in eine Hairpin-Aufnahme des Maschinenelements.

Vorteilhaft weist das Aufnahmeelement Nuten zur Aufnahme der Hairpins auf, die größer sind als die Nuten des Maschinenelements bzw. des Stators zur Hairpin-Aufnahme.

Beispielsweise können die Nuten strahlenförmig angeordnet sein. Sie können auch versetzt zueinander angeordnet sein.

Bevorzugt fallen die Hairpins durch Einwirken der Schwerkraft in ihre jeweils vorgesehene Position.

Vorteilhaft werden mehrere Kränze gebildet und zu einem mehrlagigen Kranzelement zusammengefügt.

Bevorzugt werden ein Kranz oder mehrere Kränze nach ihrer Herstellung in ein Maschinenelement bzw. Stator gefügt. Die Einfügung mehrerer Kränze in das Maschinenelement bzw. den Stator kann einzeln und nacheinander oder auch gemeinsam als Anordnung mehrerer Kränze erfolgen.

Insbesondere wird das Verfahren mit einem Vorstecknest gemäß der Erfindung durchgeführt.

Gemäß einem weiteren Aspekt der Erfindung wird ein erfindungsgemäßes Vorstecknest zur Durchführung des erfindungsgemäßen Verfahrens verwendet.

Gemäß einem zusätzlichen Aspekt wird eine erfindungsgemäße Vorrichtung zur Durchführung des erfindungsgemäßen Verfahrens verwendet.

Vorteile und Details der Erfindung, die im Zusammenhang mit dem erfindungsgemäßen Vorstecknest genannt sind, gelten auch für die erfindungsgemäße Vorrichtung und für das erfindungsgemäße Verfahren, ebenso wie Vorteile und Details, die im Zusammenhang mit dem erfindungsgemäßen Verfahren oder der erfindungsgemäßen Vorrichtung genannt sind, auch für das erfindungsgemäße Vorstecknest gelten.

Nachfolgend werden Ausführungsbeispiele der Erfindung anhand der beigefügten Zeichnungen beschrieben. Dabei zeigt:
- **Fig. 1**: eine schematische Darstellung eines erfindungsgemäßen Vorstecknests gemäß einer bevorzugten Ausführungsform als Ansicht von oben;
- **Fig. 2a und 2b**: eine schematische Darstellung eines bekannten Hairpins in einer Seitenansicht (Fig. 2a) und in einer Ansicht von oben auf das Dach des Hairpins (Fig. 2b);
- **Fig. 3a und 3b**: eine schematische Darstellung eines bekannten Stators als Draufsicht in einer Gesamtansicht (Fig. 3a) sowie in einer vergrößerten Teilansicht (Fig. 3b), mit einer Vielzahl von Nuten zur Aufnahme von Hairpins;
- **Fig. 4a und 4b**: eine schematische Darstellung eines erfindungsgemäßen Vorstecknests mit versetzten Stegen als Ansicht von oben (Fig. 4a) sowie als vergrößerte Teilansicht von oben (Fig. 4b);
- **Fig. 5**: eine schematische Darstellung eines erfindungsgemäßen Vorstecknests mit versetzten Stegen bzw. Nuten als vergrößerte Ansicht von oben;
- **Fig. 6a und 6b**: eine schematische Darstellung des oberen Teils eines Vorstecknests mit ausgebildeten Schrägen als Ansicht von vorne (Fig. 6a) sowie als Ansicht von oben (Fig. 6b);
- **Fig. 7a und 7b**: eine schematische Darstellung des oberen Teils eines Vorstecknests mit ausgebildeten Stufen als Ansicht von vorne (Fig. 7a) sowie als Ansicht von oben (Fig. 7b);
- **Fig. 8**: eine schematische Darstellung eines erfindungsgemäßen Vorstecknests ohne Außenring als Ansicht von oben;
- **Fig. 9**: eine schematische Darstellung eines erfindungsgemäßen Vorstecknests ohne Innenring als Ansicht von oben.

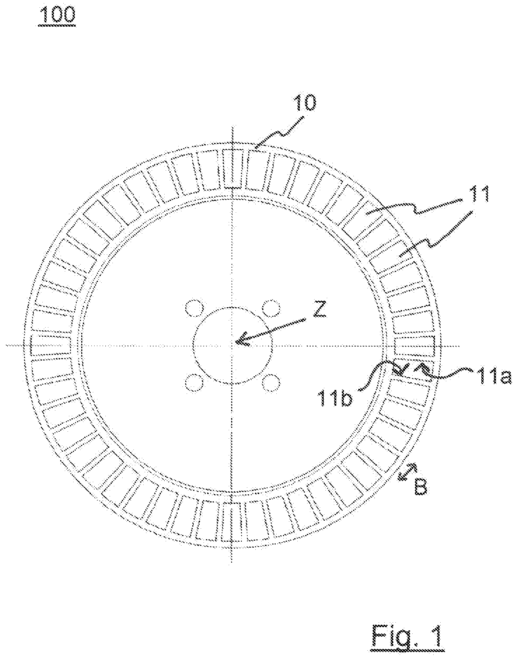

In Figur 1 ist ein Vorstecknest 100 gemäß einer bevorzugten Ausführungsform der Erfindung als Ansicht von oben dargestellt. Das Vorstecknest 100 dient zur Bildung mindestens eines Kranzes aus einer Vielzahl von U-förmigen elektrisch leitfähigen Hairpins, so dass der Kranz anschließend in einem Maschinenelement einer elektrischen Maschine verbaut werden kann. In diesem Beispiel soll der Kranz in einem Stator verbaut werden, der insbesondere für einen Elektromotor eines Kraftfahrzeugs geeignet ist.

Das Vorstecknest 100 umfasst ein Aufnahmeelement 10 mit einer Vielzahl von Nuten 11, die zur Aufnahme der Schenkel 1a, 1b U-förmiger Hairpins 1 dienen. Ein Beispiel eines derartigen, bekannten Hairpins 1 wurde oben unter Bezugnahme auf die Figuren 2a und 2b kurz beschrieben. Es können aber auch anders gestaltete Hairpins als in Figur 2a und 2b gezeigt in der Vorrichtung 100 aufgenommen werden.

In dem Aufnahmeelement 10 sind die Nuten 11 ringförmig um ein Zentrum Z des Vorstecknests 100 angeordnet. Die Nuten 11 erstrecken sich dabei senkrecht zur Ebene des Aufnahmeelements 10, das heißt senkrecht zur Zeichenebene der Figur 1.

Die Nuten 11 sind in ihrer Größe und Geometrie derart gestaltet, dass jeweils der erste Schenkel 1a eines Hairpins 1 innerhalb der Nut 11 rotierbar ist, so dass dadurch eine zwangfreie Positionierung des zweiten Schenkels 1b des Hairpins 1 in einer anderen Nut 11 ermöglicht wird (siehe auch Fig. 2a, 2b).

Die Nuten 11 des Aufnahmeelements 10 sind strahlenförmig um dessen Zentrum Z angeordnet. Sie weisen Seitenwände 11a, 11b auf, die sich in Bezug auf das Zentrum Z in radialer Richtung erstrecken. Die Breite B der Nuten 11 nimmt in radialer Richtung nach außen zu.

Die Nuten 11 des Aufnahmeelements 10 sind wesentlich größer ausgestaltet als die Hohlräume oder Nuten des Stators, in den die Hairpins 1 später aufgenommen werden sollen. Hierdurch wird das Stecken der U-förmigen Pins erleichtert und ist automatisiert durchführbar.

Durch die Geometrie der Nutenanordnung ist es möglich, bei der Einfügung eines jeweiligen Hairpins 1 in eine Nut 11 des Aufnahmeelements 10 den Hairpin 1 um seinen bereits in der Nut 11 aufgenommen Schenkel 1a zu rotieren. Das heißt, der Schenkel 1a in der Nut 11 bildet eine Rotationsachse. Der Kranz aus sich gegenseitig überlagernden Hairpins 1, der später, das heißt nach der Entnahme aus dem Vorstecknest 100, in den Stator gefügt wird, wird in dem Vorstecknest 100 zwangfrei ausgebildet.

Dagegen ist bei dem in Fig. 3b beispielhaft gezeigten, bekannten Stator beim Einstecken der Hairpins kein Rotieren des jeweiligen Hairpin-Schenkels 1b um den Rotationspunkt R möglich. Das heißt, die einzelnen Hairpins 1 können dort nicht um den bereits in die Nut 211a des Stators 200 gesteckten Schenkel 1a rotieren, so dass keine Rotation R' stattfinden kann. Dadurch entstehen beim oder nach dem Einstecken der Hairpins in den Stator Spannungen, die sich nachteilhaft auswirken können.

Durch die im Vergleich zum Stator vergrößerten Nuten 11 des erfindungsgemäßen Vorstecknests 100 und durch die Geometrie der Nuten 11 und ihrer Anordnung, welche beim Stecken die Rotation der Hairpin-Schenkel 1a, 1b in der jeweiligen Nut 11 ermöglicht, können die Hairpins 1 automatisiert im Vorstecknest 100 positioniert werden, zum Beispiel mit einem Roboter. Beim Stecken der Hairpins 1 werden Spannungen vermieden.

Anschließend können die Hairpins als fertiger Kranz oder als eine Kranzanordnung aus mehreren Kränzen automatisiert in den späteren Stator gefügt werden. Somit wird mit Hilfe des erfindungsgemäßen Vorstecknests ein prozesssicheres, automatisiertes und spannungsfreies Ausbilden von Hairpinkränzen in Statoren ermöglicht.

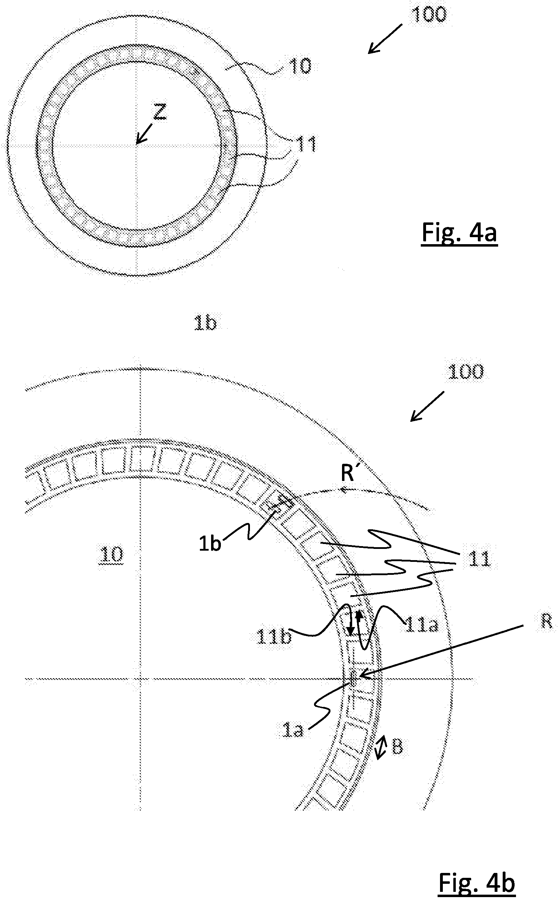

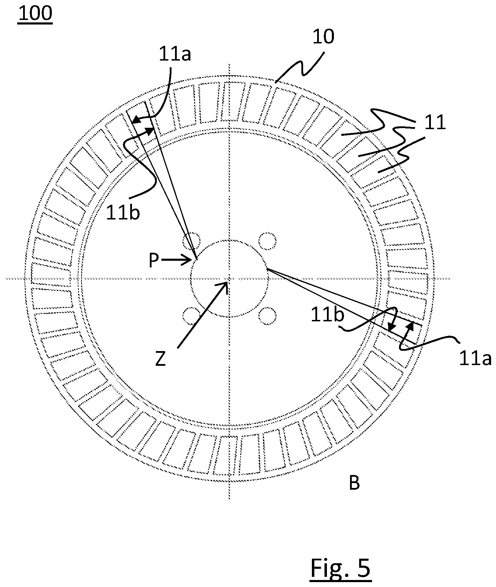

Die Figuren 4a und 4b zeigen ein weiteres Ausführungsbeispiel der Erfindung als Ansicht von oben bzw. als vergrößerte Teilansicht von oben. Figur 5 zeigt eine vergrößerte Ansicht von oben. In dem Vorstecknest 100 gemäß diesem Beispiel der Erfindung sind die Nuten 11 leicht versetzt angeordnet. Diese Anordnung kann als turbinenförmig bezeichnet werden.

Die Seitenwände 11a, 11b der Nuten 11 erstrecken sich jeweils in Richtung eines Punktes P außerhalb des Zentrums Z des Vorstecknests 100 (siehe Fig. 5). Die Punkte P der jeweiligen Nuten 11 sind auf einem Kreis um das Zentrum Z angeordnet.

Auch in diesem Ausführungsbeispiel nimmt die Breite B der Nuten 11 in radialer Richtung nach außen zu. Die übrigen Details und Merkmale dieses Ausführungsbeispiels sind wie oben in Bezug auf das erste Ausführungsbeispiel beschrieben.

Bei der Positionierung eines Hairpins 1 kann dieser um seinen Schenkel 1a, der sich in einer Nut 11 befindet, rotieren. Der Rotationspunkt bzw. die Rotationsachse ist in Fig. 4b durch R gekennzeichnet. Somit kann das andere Ende des Hairpins, das heißt dessen Schenkel 1b, in dem Aufnahmeelement 10 bzw. in seiner Nut 11 um den Rotationspunkt oder die Rotationsachse R rotieren. Die Rotationsbewegung des Schenkels 1b um den Schenkel 1a ist durch R' gekennzeichnet.

Die Geometrie der Nuten 11 ist derart ausgestaltet, dass diese Rotation ermöglicht wird. Da die Pins mehr Platz in der Aufnahme haben und keinem Zwang ausgesetzt sind, werden die Pins beim Stecken nicht beschädigt. Zudem fallen die Pins durch Einwirkung der Schwerkraft besser und leichter in die vorgesehenen Positionen.

Durch die versetzten Nuten bzw. Stege ergibt sich ein noch größeres Spiel für die Hairpins. Dies führt zu einer noch weiter verbesserten spannungsfreien Anordnung der Hairpins in Form eines oder mehrerer Kränze.

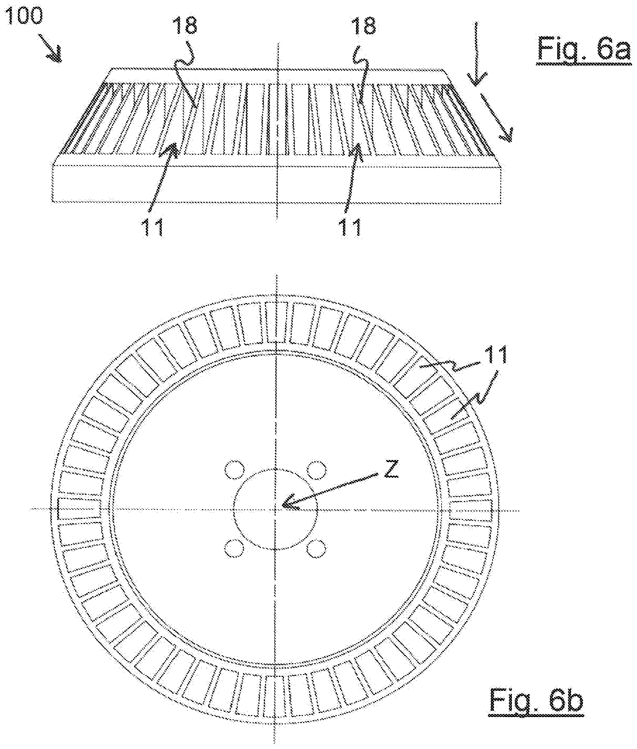

In den Figuren 6a und 6b ist eine weitere mögliche Ausgestaltung der Erfindung gezeigt. Dabei hat das Vorstecknest 100 an seiner Oberseite ausgebildete Schrägen 18, die sich in radialer Richtung erstrecken. In diesem Beispiel sind die Schrägen 18 radial nach außen hin abfallend ausgebildet. Die Schrägen 18 befinden sich jeweils am oberen Ende der Nuten 11 und bewirken, dass die Pins oder Hairpins oder daraus gebildete Kränze durch Einwirkung der Schwerkraft und/oder eine externe Kraft auf einen äußeren Durchmesser bzw. Radius des Aufnahmeelements 10 gebracht und dort positioniert werden.

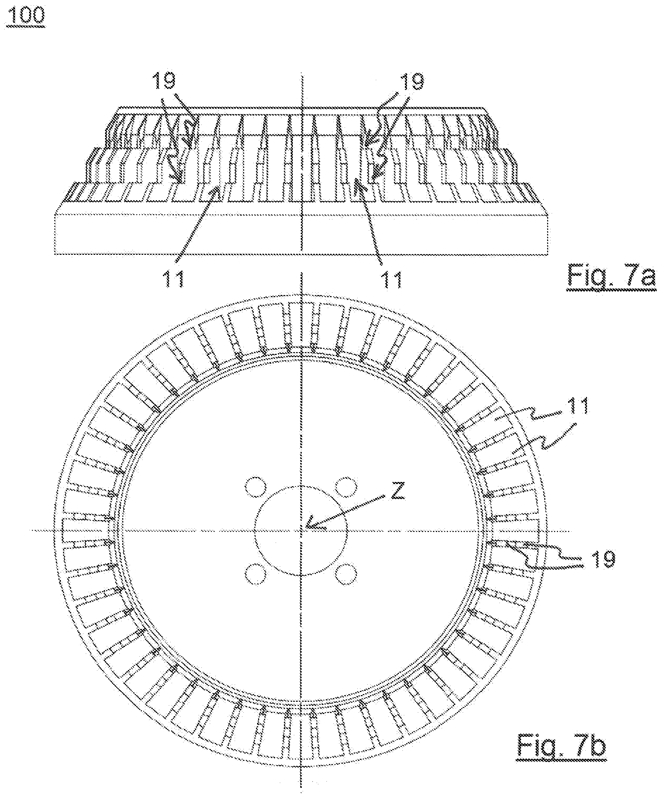

In den Figuren 7a und 7b ist eine andere mögliche Ausgestaltung der Erfindung gezeigt, bei der an der Oberseite des Vorstecknests 100 in radialer Richtung Stufen oder Absätze 19 ausgebildet sind. Die Stufen 19 befinden sich am oberen Rand der Nuten 11 und sind in diesem Beispiel radial nach außen hin abfallend angeordnet. Sie bewirken, ebenso wie die oben beschriebenen Schrägen 18, dass die Pins oder Hairpins oder daraus gebildete Kränze durch Einwirkung der Schwerkraft und/oder durch eine externe bzw. von außen wirkende Kraft auf einen äußeren Durchmesser bzw. Radius des Aufnahmeelements 10 gebracht und dort entsprechend positioniert werden.

Das heißt, beim Einstecken eines einzelnen Pins oder eines aus Pins gebildeten Kranzes von oben in die Nuten 11 werden die Pins oder Pin-Kränze mit Hilfe der Schrägen 18 und/oder der Stufen 19 nach außen auf die vorgesehene radiale Position gebracht.

Die Schrägen 18 und Stufen 19 können auch miteinander kombiniert sein.

Die radiale Positionierung der Hairpins mithilfe der Schrägen 18 und/oder der Absätze 19 der Nuten 11, wie oben unter Bezugnahme auf die Figuren 6a und 6b bzw. 7a und 7b beschrieben, bewirkt insbesondere, dass nach Fertigstellung eines Kranzes aus Hairpins 1 mehrere Kränze zusammengefügt und positioniert werden können.

Die einzelnen, aus Hairpins gebildeten Kränze können in der Aufnahme bzw. in dem Aufnahmeelement 10 in radialer Richtung definiert positioniert und dort gehalten werden, so dass ein zu fügender Kranz nicht mit einem bereits gefügten Kranz kollidiert.

Dadurch wird das prozesssichere Fügen mehrerer Kränze in der Aufnahme oder in dem Aufnahmeelement 10 gewährleistet. In diesem Fall bildet das Aufnahmeelement 10 eine Sammelaufnahme zum Zusammenfügen mehrerer Kränze.

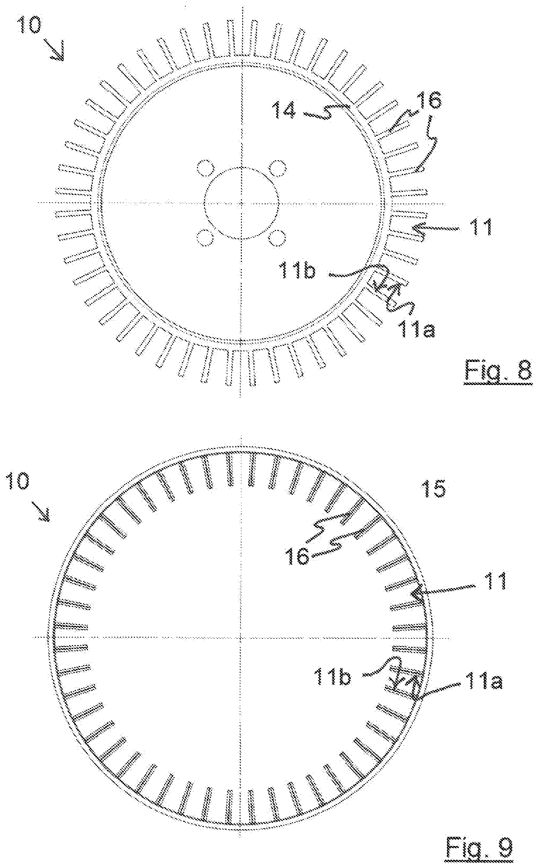

Fig. 8 zeigt eine noch weitere mögliche Ausgestaltung des Aufnahmeelements 10. Dabei hat das Aufnahmeelement 10 einen Innenring 14, jedoch keinen Außenring. Stattdessen werden die Pins oder Hairpins durch die Geometrie des Aufnahmeelements 10 in der notwendigen Position gehalten. Hierzu sind die Nuten 11 an der Außenseite des Innenrings 14 des Aufnahmeelements 10 ausgebildet. Die Seitenwände 11a, 11b der Nuten 11 erstrecken sich von der Außenseite des Innenrings 14 radial nach außen.

Zu diesem Zweck sind an dem Innenring 14 Stege oder Vorsprünge 16 in Form von Lamellen ausgebildet, die sich von der Außenseite des Innenrings 14 nach außen oder radial nach außen erstrecken. Die Vorsprünge 16 bilden somit Halteelemente für die Hairpins 1. Beispielsweise können am Innenring 14 auch Bolzen, Zacken, Bleche oder andere Halteelemente montiert werden, welche die Pins aufnehmen bzw. Nuten zur Aufnahme der Pins bilden.

Fig. 9 zeigt eine weitere mögliche Ausgestaltung des Aufnahmeelements 10, bei dem lediglich ein Außenring 15 existiert, jedoch kein Innenring. Vom Außenring 15 erstrecken sich Stege oder Vorsprünge 16 in Form von Lamellen nach innen oder radial nach innen und bilden somit Halteelemente für die Hairpins 1. Auch hier können beispielsweise Bolzen, Zacken, Bleche oder andere Halteelemente montiert werden, welche die Pins aufnehmen bzw. Nuten zur Aufnahme der Pins bilden.

Auch ist es möglich, sowohl einen Innenring 14 als auch einen Außenring 15 vorzusehen, zwischen denen sich die Nuten 11 zur Aufnahme der Hairpins an deren Schenkeln 1a, 1b erstrecken.

Nachfolgend wird beispielhaft ein Verfahren zur Bildung eines Kranzes aus einer Vielzahl von U-förmigen, elektrisch leitfähigen Hairpins beschrieben. Das Verfahren dient dazu, den Kranz anschließend in einem Maschinenelement einer elektrischen Maschine verbauen zu können, insbesondere in einem Stator eines Elektromotors für Kraftfahrzeuge.

Bei dem Verfahren werden zunächst eine Vielzahl von U-förmigen, elektrisch leitfähigen Hairpins 1 bereitgestellt (siehe Fig. 2a und 2b).

Die Hairpins 1 werden nun durch Stecken ihrer Schenkel 1a, 1b in das Aufnahmeelement 10 zusammengefügt (siehe zum Beispiel Fig. 1 und Fig. 5). Auf diese Weise bilden die Hairpins 1 gemeinsam einen Kranz.

Beim Stecken der Hairpins 1 in das Aufnahmeelement 10 wird ein erster Schenkel 1a des jeweiligen Hairpins 1 in dem Aufnahmeelement 10 rotierbar gehalten, so dass der zweite Schenkel 1b des jeweiligen Hairpins 1 in dem Aufnahmeelement 10 durch Rotation um den ersten Schenkel 1a positioniert werden kann (siehe zum Beispiel Fig. 4b).

Zur leichteren, zwangfreien Positionierung sind in dem Aufnahmeelement 10 die Nuten 11 größer als die Nuten des Stators, in die später die Hairpins aufgenommen werden sollen. Die Nuten 11 können auch strahlenförmig und/oder versetzt zueinander angeordnet sein.

Bei dem Steckvorgang fallen die Hairpins 1 durch Einwirken der Schwerkraft in ihre jeweils vorgesehene Position.

Insbesondere sind zur verbesserten Positionierung Schrägen 18 oder Absätze 19 vorgesehen, wie sie oben unter Bezugnahme auf die Figs. 6a und 6b bzw. 7a und 7b beschrieben sind.

Der auf diese Weise gebildete Kranz aus Hairpins wird anschließend zur Einbringung in ein Maschinenelement oder in eine Hairpinaufnahme eines Maschinenelements bereitgestellt, wobei das Maschinenelement in diesem Beispiel ein Stator ist. Danach kann der Kranz in den Stator gefügt werden. Auch können zum Beispiel mehrere Kränze nacheinander in den Stator gefügt werden.

Insbesondere können bei dem Verfahren mit Hilfe des Vorstecknests 100 auch mehrere Kränze durch Zusammenfügen einzelner Hairpins gebildet werden und zu einem mehrlagigen Kranzelement zusammengefügt werden. Diese Anordnung aus mehreren Kränzen kann anschließend aus dem Vorstecknest 100 entnommen und als Gesamtpaket in den Stator gefügt werden.

Weiterhin können auch mehrere Vorstecknester zur Herstellung einer aus mehreren Hairpin-Kränzen bestehenden Kranzanordnung verwendet werden. In diesem Fall werden in einem Vorstecknest oder in mehreren Vorstecknestern die einzelnen Kränze aus Hairpins mit unterschiedlichen Durchmessern gebildet. Die auf diese Weise gebildete Kränze mit verschiedenen Durchmessern werden anschließend in einem weiteren Vorstecknest gemeinsam angeordnet, das in diesem Fall als Sammelaufnahme bzw. Sammelvorstecknest dient und zu diesem Zweck ausgestaltet ist.

Das Bilden des Kranzes oder der Kränze aus Hairpins und das anschließende Liefern und Einbringen in das Gehäuse eines Maschinenelements, das zum Beispiel ein Statorgehäuse ist, erfolgt vorzugsweise automatisiert, zum Beispiel durch einen Roboter.

Durch die Geometrie der Aufnahme bzw. des Aufnahmeelements 10 ist es somit möglich, mit einem Roboter die Hairpins zu Kränzen zu stecken und mehrere Hairpin-Kränze in einer Aufnahme zu sammeln.

### Bezugszeichenliste

- 1: Hairpin
- 1a, 1b: Schenkel des Hairpins
- 10: Aufnahmeelement
- 11: Nuten
- 11a, 11b: Seitenwände der Nuten
- 14: Innenring
- 15: Außenring
- 16: Vorsprünge, Lamellen
- 18: Schräge
- 19: Absatz
- 100: Vorstecknest
- 200: Stator
- 211: Nuten des Stators
- 211a, 211b: Nuten des Stators

- B: Breite der Nuten
- P: Punkt außerhalb des Zentrums
- R: Rotationspunkt oder -achse
- R': Rotationsbewegung
- Z: Zentrum

## Patentansprüche

1. Vorstecknest zur Bildung eines Kranzes aus einer Vielzahl von U-förmigen, elektrisch leitfähigen Hairpins (1), um den Kranz anschließend in einem Maschinenelement einer elektrischen Maschine verbauen zu können, umfassend:
ein Aufnahmeelement (10) mit einer Vielzahl von Nuten (11) zur Aufnahme der Schenkel (1a, 1b) der U-förmigen Hairpins (1),
wobei
die Nuten (11) ringförmig um ein Zentrum Z angeordnet sind und sich senkrecht zur Ebene des Aufnahmeelements (10) erstrecken, **gekennzeichnet dadurch, dass**
die Nuten (11) in ihrer Größe und Geometrie derart gestaltet sind, dass jeweils ein erster Schenkel (1a) eines Hairpins (1) innerhalb der Nut (11) rotierbar ist, um dadurch eine zwangfreie Positionierung des zweiten Schenkels (1b) des Hairpins (1) in einer anderen Nut (11) zu ermöglichen.

2. Vorstecknest nach Anspruch 1, **dadurch gekennzeichnet, dass** die Nuten (11) des Aufnahmeelements (10) wesentlich größer sind als die Hohlräume des Maschinenelements zur Aufnahme der Hairpins (1).

3. Vorstecknest nach Anspruch 1 oder 2, **dadurch gekennzeichnet, dass** die Nuten (11) derart ausgestaltet sind, dass die Hairpins (1) durch Einwirkung der Schwerkraft in ihre vorgesehene Position im Aufnahmeelement (10) bewegt werden.

4. Vorstecknest nach einem der vorhergehenden Ansprüche, **dadurch gekennzeichnet, dass** die Nuten (11)
4.1. strahlenförmig um das Zentrum Z angeordnet sind, und/oder
4.2. Seitenwände (11a, 11b) aufweisen, die sich in Bezug auf das Zentrum Z in radialer Richtung erstrecken, und/oder
4.3. eine Breite B aufweisen, die in radialer Richtung nach außen zunimmt.

5. Vorstecknest nach einem der Ansprüche 1 bis 3, **dadurch gekennzeichnet, dass** die Nuten (11)
5.1. versetzt zueinander angeordnet sind, und oder
5.2. jeweils Seitenwände (11a, 11b) aufweisen, die sich in Richtung eines Punktes P außerhalb des Zentrums Z erstrecken;
5.3. jeweils Seitenwände (11a, 11b) aufweisen, die sich in Richtung eines Punktes P außerhalb des Zentrums Z erstrecken, wobei die Punkte P der einzelnen Nuten (11) auf einem Kreis um das Zentrum Z angeordnet sind.

6. Vorstecknest nach einem der vorhergehenden Ansprüche, **dadurch gekennzeichnet, dass** das Aufnahmeelement (10)
6.1. einen Innenring (14) aufweist, an dessen Außenseite die Seitenwände (11a, 11b) der Nuten (11) ausgebildet sind, um die Hairpins (1) in ihrer jeweiligen Position zu halten, und/oder
6.2. einen Außenring (15) aufweist, an dessen Innenseite die Seitenwände (11a, 11b) der Nuten (11) ausgebildet sind, um die Hairpins (1) in ihrer jeweiligen Position zu halten, und/oder
6.3 einen Innenring (14) und einen Außenring (15) aufweist, zwischen denen die Nuten (11) als Hohlräume ausgebildet sind, und/oder 6.4. Halteelemente aufweist, die am Innenring (14) und/oder am Außenring (15) angeordnet sind, um die Nuten (11) zu bilden, und/oder 6.5. Halteelemente aufweist, die als Bolzen, Zapfen oder Bleche ausgestaltet sind, um die Nuten (11) zu bilden.

7. Vorstecknest nach einem der vorhergehenden Ansprüche, **dadurch gekennzeichnet, dass**
7.1. die Nuten (11) derart gestaltet sind, dass durch Aufnahme der Schenkel (1a, 1b) der Hairpins (1) mehrere ringförmige Kränze gebildet werden, und/oder
7.2. die Nuten (11) eine Schräge (18) und/oder ein oder mehrere Absätze (19) aufweisen, um einen oder mehrere Hairpin-Schenkel (1a, 1b) oder Kränze in radialer Richtung zu positionieren, und/oder 7.3. das Vorstecknest im Bereich der Nuten (11) eine Kegelstumpfform aufweist, und/oder
7.4. die Nuten (11) Seitenwände aufweisen, an deren oberen Enden eine Schräge und/oder eine oder mehrere Stufen ausgebildet sind, und/oder
7.5. das Vorstecknest als Mehrfach-Vorstecknest zum Bilden mehrerer Kranzlagen ausgestaltet ist.

8. Vorrichtung zum Herstellen eines Maschinenelements einer elektrischen Maschine, umfassend:
ein Vorstecknest nach einem der voranstehenden Ansprüche zur Bildung eines Kranzes aus einer Vielzahl von U-förmigen, elektrisch leitfähigen Hairpins (1),
ein Maschinenelementgehäuse zur Aufnahme der Hairpins (1), und
eine Einrichtung zum Liefern und Einbringen des Kranzes aus U-förmigen Hairpins (1) in das Maschinenelementgehäuse.

9. Verfahren zur Bildung eines Kranzes aus einer Vielzahl von U-förmigen, elektrisch leitfähigen Hairpins (1), um den Kranz anschließend in einem Maschinenelement einer elektrischen Maschine verbauen zu können, umfassend die Schritte:
- Bereitstellen einer Vielzahl von U-förmigen, elektrisch leitfähigen Hairpins (1);
- Zusammenfügen der Hairpins (1) durch Stecken der Schenkel (1a, 1b) der Hairpins (1) in ein Aufnahmeelement (10), sodass die Hairpins (1) gemeinsam einen Kranz bilden;
- wobei beim Stecken des jeweiligen Hairpins (1) in das Aufnahmeelement (10) ein erster Schenkel (1a) des Hairpins (1) in dem Aufnahmeelement (10) rotierbar gehalten wird, um den zweiten Schenkel (1b) des Hairpins (1) in dem Aufnahmeelement (10) durch Rotation um den ersten Schenkel (1a) zu positionieren;
- anschließend Bereitstellen des Kranzes aus Hairpins (1) zur Einbringung in eine Hairpin-Aufnahme (110) eines Maschinenelements (100).

10. Verfahren nach Anspruch 9, **dadurch gekennzeichnet, dass** das Aufnahmeelement (10) Nuten (11) zur Aufnahme der Hairpins (1) aufweist, 10.1. die größer sind als die Nuten (111) zur Hairpin-Aufnahme des Maschinenelements (100), und/oder
10.2. die strahlenförmig angeordnet sind, und/ oder
10.3. die versetzt zueinander angeordnet sind.

11. Verfahren nach Anspruch 9 oder 10, **dadurch gekennzeichnet, dass** die Hairpins (1) durch Einwirken der Schwerkraft in ihre jeweils vorgesehene Position fallen.

12. Verfahren nach einem der Ansprüche 9 bis 11, **dadurch gekennzeichnet, dass** mehrere Kränze gebildet und zu einem mehrlagigen Kranzelement zusammengefügt werden.

13. Verfahren nach einem der Ansprüche Anspruch 9 bis 12, **dadurch gekennzeichnet, dass** es mit einem Vorstecknest nach einem der Ansprüche 1 bis 7 durchgeführt wird.

14. Verwendung eines Vorstecknests nach einem der Ansprüche 1 bis 7 zur Durchführung des Verfahrens nach einem der Ansprüche 9 bis 13.

15. Verwendung einer Vorrichtung nach Anspruch 8 zur Durchführung des Verfahrens nach einem der Ansprüche 9 bis 13.

## Claims

1. Pre-pinning nest for forming a ring from a plurality of U-shaped electrically conductive hairpins (1) in order to be able to subsequently install the ring in a machine element of an electrical machine, comprising:
a receiving element (10) having a plurality of grooves (11) for receiving the legs (1a, 1b) of the U-shaped hairpins (1), wherein
the grooves (11) are arranged annularly around a center Z and extend perpendicularly to the plane of the receiving member (10) **characterized in that**
the grooves (11) are designed in their size and geometry in such a way that in each case a first leg (1a) of a hairpin (1) is rotatable within the groove (11),
thereby enabling a constraint-free position of the second leg (1b) of the hairpin (1) in another groove (11).

2. Pre-pinning nest according to claim 1, **characterized in that** the grooves (11) of the receiving element (10) are substantially larger than the cavities of the machine element for receiving the hairpins (1).

3. Pre-pinning nest according to claim 1 or 2, **characterized in that** the grooves (11) are designed in such a way that the hairpins (1) are moved into their intended position in the receiving element (10) by the action of gravity.

4. Pre-pinning nest according to any of the preceding claims, **characterized in that** the grooves (11)
4.1 are arranged radially around the center Z and/or
4.2 have side walls (11a, 11b) which extend in the radial direction with respect to the center Z and/or
4.3 have a width B which increases outwardly in the radial direction.

5. Pre-pinning nest according to one of the claims 1 to 3, **characterized in that** the grooves (11)
5.1 are arranged offset from one another and/or
5.2 each have side walls (11a, 11b) which extend in the direction of a point P outside the center Z;
5.3 each have side walls (11a, 11b) extending in the direction of a point P outside the center Z, the points P of the individual grooves (11) being arranged on a circle around the center Z.

6. Pre-pinning nest according to any one of the preceding claims, **characterized in that** the receiving element (10) has
6.1 an inner ring (14), on the outside of which the side walls (11a, 11b) of the grooves (11) are formed in order to hold the hairpins (1) of their respective position and/or
6.2 an outer ring (15), on the inside of which the side walls (11a, 11b) of the grooves (11) are formed in order to hold the hairpins (1) in their respective position and/or
6.3 an inner ring (14) and an outer ring (15) between which the grooves (11) are formed as cavities and/or
6.4 retaining elements which are arranged on the inner ring (14) and/or on the outer ring (15) in order to form the grooves (11) and/or
6.5 retaining elements designed as bolts, pins or plates to form the grooves (11).

7. Pre-pinning nest according to any of the preceding claims, **characterized in that**
7.1 the grooves (11) are designed in such way that a plurality of annular rings are formed by receiving the legs (1a, 1b) of the hairpins (1) and/or
7.2 the grooves (11) have a slope (18) and/or one or more shoulders (19) to position one or more hairpin legs (1a, 1b) or rings in radial direction and/or
7.3 the pre-pinning nest has a frustoconical shape in the region of the grooves (11) and/or
7.4 the grooves (11) have side walls at the upper ends of which a slope and/or one or more steps are formed and/or
7.5 the pre-pinning nest is designed as a multiple pre-pinning nest for forming several ring layers.

8. Device for manufacturing a machine element of an electric machine, comprising:
a pre-pinning nest according to any one of the preceding claims for forming a ring from a plurality of U-shaped electrically conductive hairpins (1),
a machine element housing for receiving the hairpins (1), and means for supplying and inserting the ring from of U-shaped hairpins (1) into the machine element housing.

9. Method of forming a ring from a plurality of U-shaped electrically conductive hairpins (1) so as to be able to subsequently install the ring in a machine element of an electrical machine, comprising the steps of:
- providing a plurality of U-shaped electrically conductive hairpins (1);
- assembling the hairpins (1) by inserting the legs (1a, 1b) of the hairpin (1) into a receiving member (10) so that the hairpins (1) together form a ring;
- wherein upon insertion of the respective hairpin (1) into the receiving element (10), a first leg (1a) of the hairpin (1) is rotatably held in the receiving element (10) in order to position the second leg (1b) of the hairpin (1) in the receiving element (10) by rotation about the first leg (1a);
- subsequently providing the ring from hairpins (1) for insertion into a hairpin receptacle (110) of a machine element (100).

10. Method according to claim 9, **characterized in that** the receiving element (10) has grooves (11) for receiving the hairpins (1),
10.1 which are larger than the grooves (111) for receiving hairpins of the machine element (100) and/or
10.2 which are arranged radially and/or
10.3 which are arranged offset from one another.

11. Method according to claim 9 or 10, **characterized in that** the hairpins (1) fall into their respective intended position by the action of gravity.

12. Method according to one of claims 9 to 11, **characterized in that** a plurality of rings are formed and joined together to form a multilayer ring element.

13. Method according to any one of claims 9 to 12, **characterized in that** it is carried out using a pre-pinning nest according to any one of claims 1 to 7.

14. Use of a pre-pinning nest according to any of claims 1 to 7 for carrying out the method according to any one of claims 9 to 13.

15. Use of a device according to claim 8 for carrying out the method according to any one of claims 9 to 13.

## Revendications

1. Dispositif de pré-montage pour former une couronne à partir d'une pluralité d'éléments conducteurs électriques en épingle à cheveux (1) en forme de U, afin de pouvoir ensuite monter la couronne dans un élément de machine d'une machine électrique, comprenant:
un élément de réception (10) avec une pluralité de rainures (11) pour recevoir les branches (1a, 1b) des épingles à cheveux (1) en forme de U, dans lequel les rainures (11) sont disposées en forme d'anneau autour d'un centre Z et
s'étendent perpendiculairement au plan de l'élément de réception (10), **caractérisé en ce que**
les rainures (11) sont conçues dans leur taille et leur géométrie de telle sorte que chaque fois une première branche (1a) d'un épingle à cheveux (1) en forme de U peut tourner à l'intérieur de la rainure (11) pour permettre ainsi une position sans contrainte de la deuxième branche (1b) de l'épingle à cheveux (1) en forme de U dans une autre rainure (11).

2. Dispositif de pré-montage selon la revendication 1, **caractérisé en ce que** les rainures (11) de l'élément de réception (10) sont sensiblement plus grandes que les cavités de l'élément de machine destinées à recevoir les épingles à cheveux (1).

3. Dispositif de pré-montage selon la revendication 1 ou 2, **caractérisé en ce que** les rainures (11) sont conçues de telle sorte que les épingles à cheveux (1) sont déplacées dans leur position prévue dans l'élément de réception (10) sous l'effet de la gravité.

4. Dispositif de pré-montage selon l'une quelconque des revendications précédentes, **caractérisé en ce que** les rainures (11)
4.1 sont disposées en rayons autour du centre Z et/ou
4.2 présentent des parois latérales (11a, 11b) qui s'étendent dans la direction radiale par rapport au centre Z et/ou
4.3 présentent une largeur B qui augmente dans la direction radiale vers l'extérieur.

5. Dispositif de pré-montage selon l'une quelconque des revendications 1 à 3, **caractérisé en ce que** les rainures (11)
5.1 sont décalées les unes par rapport aux autres et/ou
5.2 présentent chacune des parois latérales (11a, 11b) qui s'étendent en direction d'un point P situé en dehors du centre Z ;
5.3 présentent respectivement des parois latérales (11a, 11b) qui s'étendent en direction d'un point P situé en dehors du centre Z, les points P des différentes rainures (11) étant disposés sur un cercle autour du centre Z.

6. Dispositif de pré-montage selon l'une quelconque des revendications précédentes, **caractérisé en ce que** l'élément de réception (10) comprend 6.1 une bague intérieure (14) sur la face extérieure de laquelle sont formées les parois latérales (11a, 11b) des rainures (11) pour maintenir les épingles à cheveux (1) dans leur position respective, et/ou 6.2 une bague extérieure (15), sur le côté intérieur de laquelle sont formées les parois latérales (11a, 11b) des rainures (11) pour maintenir les épingles à cheveux (1) dans leur position respective, et/ou 6.3 une bague intérieure (14) et une bague extérieure (15) entre lesquelles les rainures (11) sont formées comme des espaces creux, et/ou 6.4 des éléments de retenue qui sont disposés sur la bague intérieure (14) et/ou sur la bague extérieure (15) pour former les rainures (11), et/ou 6.5 des éléments de retenue qui sont conçus comme des boulons, des tenons ou des tôles pour former les rainures (11).

7. Dispositif de pré-montage selon l'une quelconque des revendications précédentes, **caractérisé en ce que**
7.1 les rainures (11) sont conçues de manière à former une pluralité de couronnes annulaires en recevant les branches (1a, 1b) des épingles à cheveux (1) et/ou
7.2 les rainures (11) comportent un biseau (18) et/ou un ou plusieurs épaulements (19) pour positionner une ou plusieurs branches (1a, 1b) des épingles à cheveux ou des couronnes dans la direction radiale et/ou
7.3 le dispositif de pré-montage présente une forme tronconique dans la zone des rainures (11) et/ou
7.4 les rainures (11) présentent des parois latérales aux extrémités supérieures desquelles sont formés un biseau et/ou un ou plusieurs gradins et/ou
7.5 le dispositif de pré-montage est conçu comme un dispositif de pré-montage multiple pour former plusieurs couches de couronne.

8. Dispositif pour la fabrication d'un élément de machine électrique, comprenant:
un dispositif de pré-montage selon l'une des revendications précédentes pour former une couronne à partir d'une pluralité d'épingles à cheveux (1) en forme de U et conductrices de l'électricité,
un boîtier d'élément de machine destiné à recevoir les épingles à cheveux (1) et
un dispositif de fourniture et d'insertion de la couronne d'épingles à cheveux (1) en forme de U dans le boîtier d'élément de machine.

9. Procédé de formation d'une couronne à partir d'une pluralité d'éléments conducteurs électriques en épingle à cheveux (1) en forme de U, afin de pouvoir ensuite monter la couronne dans un élément de machine d'une machine électrique, comprenant les étapes suivantes:
- mise à disposition d'une pluralité d'éléments conducteurs électriques en épingle à cheveux (1) en forme de U;
- assemblage des épingles à cheveux (1) par l'enfichage des branches (1a, 1b) de l'épingle à cheveux (1) dans un élément de réception (10), de sorte que les épingles à cheveux (1) forment ensemble une couronne;
- dans lequel, lors de l'insertion de l'épingle à cheveux (1) respective dans l'élément de réception (10), une première branche (1a) de l'épingle à cheveux (1) est maintenue en rotation dans l'élément de réception (10) afin de positionner la deuxième branche (1b) de l'épingle à cheveux (1) dans l'élément de réception (10) par rotation autour de la première branche (1a);
- ensuite mise à disposition la couronne à partir des épingles à cheveux (1) pour l'insérer dans un logement d'épingles à cheveux (110) d'un élément de machine (100).

10. Procédé selon la revendication 9, **caractérisé en ce que** l'élément de réception (10) présente des rainures (11) pour recevoir les épingles à cheveux (1),
10.1 qui sont plus grandes que les rainures (111) destinées à recevoir les épingles à cheveux de l'élément de machine (100) et/ou
10.2 qui sont disposées en forme de rayons et/ou
10.3 qui sont disposées de manière décalée les unes par rapport aux autres.

11. Procédé selon la revendication 9 ou 10, **caractérisé en ce que** les épingles à cheveux (1) tombent dans leur position respective prévue sous l'effet de la gravité.

12. Procédé selon l'une quelconque des revendications 9 à 11, **caractérisé en ce que** plusieurs couronnes sont formées et assemblées en un élément de couronne multicouche.

13. Procédé selon l'une quelconque des revendications 9 à 12, **caractérisé en ce qu'**il est mis en œuvre à l'aide d'un dispositif de pré-montage selon l'une quelconque des revendications 1 à 7.

14. Utilisation d'un dispositif de pré-montage selon l'une des revendications 1 à 7 pour la mise en œuvre du procédé selon l'une quelconque des revendications 9 à 13.

15. Utilisation d'un dispositif selon la revendication 8 pour la mise en œuvre du procédé selon l'une quelconque des revendications 9 à 13.
